# EUROPEAN PATENT APPLICATION

(11) **EP 2 184 634 A2**
(43) Date of publication of application: **12.05.2010**
(21) Application number: 09175129.7
(22) Date of filing: 05.11.2009
(51) Int. Cl.: G02F 1/13357

(54) **Backlight module and light-emitting device thereof**

(30) Priority: 06.11.2008 TW 97219835 U; 28.11.2008 TW 97221309 U; 06.01.2009 TW 98200067 U
(71) Applicant: Starchips Technology Inc., Hsin-Chu (TW)
(72) Inventor: Shen, En Liang, Yunlin County 630 (TW); Hu, Meng Hsia, Taichung City 404 (TW)
(74) Representative: 2K Patentanwälte Blasberg Kewitz & Reichel

(57) **Abstract**

A light emitting device of the backlight module comprises a carrier, an electrical contact, a light emitting diode (LED) driving circuit, and a plurality of LFDs. The carrier comprises a surface, and the electrical contact is electrically connected to a voltage source for providing a voltage potential substantially equal to that of the voltage source. The LED driving circuit comprises at least one driving component electrically connected to the electrical contact, and the plurality of LEDs electrically connected between the electrical contact and the LED driving circuit. The electrical contact, the LED driving circuit, and the plurality of LEDs are all positioned on the surface of the carrier.

## Description

### BACKGROUND OF THE INVENTION

### 1. Field of the Invention

The present invention relates to a backlight module and light-emitting device thereof, and more particularly to a direct backlight module and an edge-type backlight module and light-emitting device thereof.

### 2. Description of the Related Art

With numerous applications of liquid crystal display (LCD) for electronic apparatuses, such as televisions, monitors, personal computers, mobile phones, and PDAs, demand for backlight modules of LCDs continues to increase. Because the liquid crystal in an LCD does not emit any light itself, the liquid crystal requires a backlight module to provide a uniform and high brightness light source, so that the LCD can display images clearly and sharply. Therefore, the performance of the backlight module can affect the display quality of the display directly. As a result, the backlight module is one of the most important parts of the LCD.

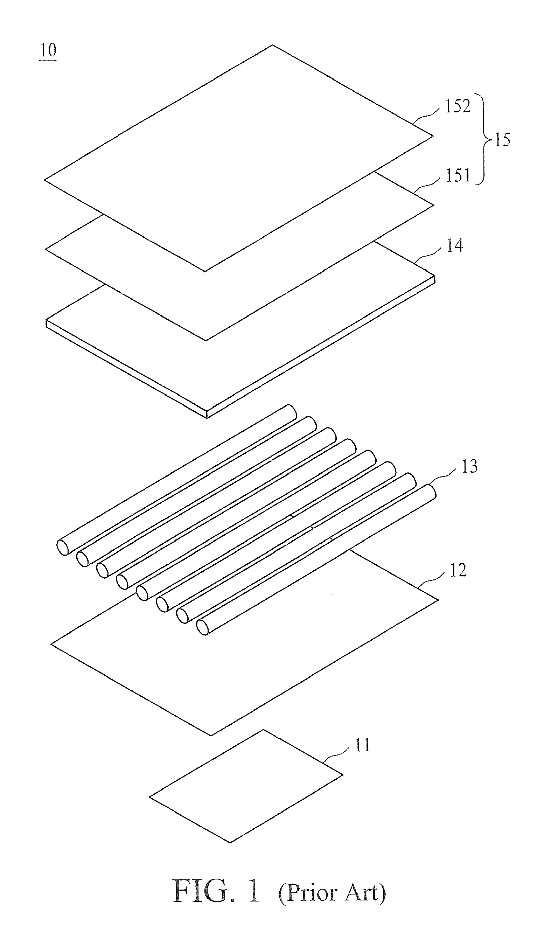

Generally, backlight module types include side-edge backlight modules and direct backlight modules. FIG. 1 shows a pictorial decomposition diagram of a conventional direct backlight module 10, wherein the backlight module 10 utilizes a cold cathode fluorescent lamp (CCFL) as a light source. The backlight module 10 comprises an inverter 11, a rear frame 12, a reflecting plate (not shown) positioned on the rear frame 12, a plurality of parallel lamps 13, a diffuser plate 14, and a plurality of optical films 15. The optical films 15 comprise a diffusion film 151 and a convergent film 152 for diffusing and modifying the direction of the light source, respectively. The optical films 15 and the diffuser plate 14 are positioned above the lamps 13 and diffuse the light emitted by the lamps 13 uniformly to an LCD. The reflecting plate positioned on the rear frame 12 is used to reflect the light emitted by the lamps 13 so as to raise the utilization rate of the light. Two electrodes arranged at opposite ends of the respective lamps 13 are driven by a high voltage provided by the inverter 11. Because the lamps contain mercury, an environmentally unfriendly material, current direct backlight modules are gradually shifting to use of light emitting diodes (LEDs) in place of the conventional CCFL as a light source.

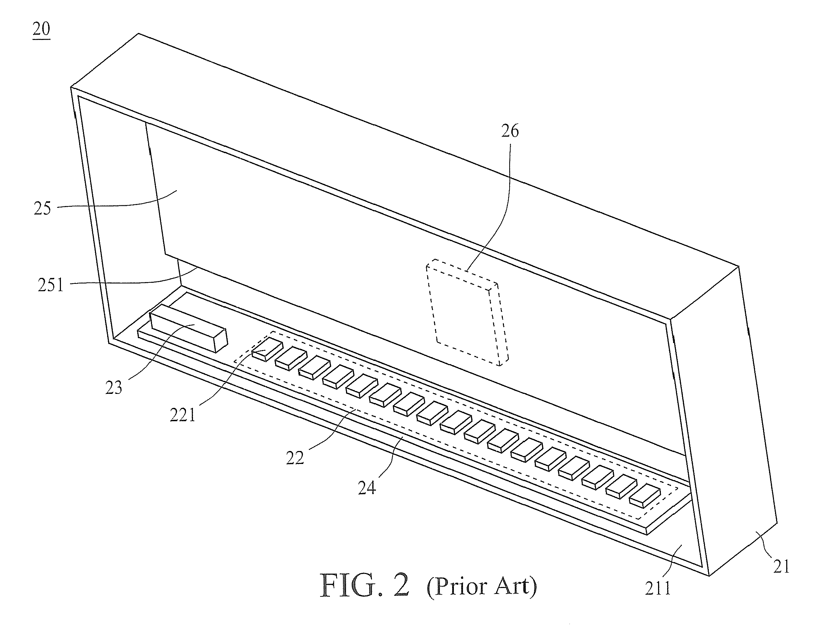

FIG. 2 shows a top view of a conventional side-edge backlight module 20, wherein the backlight module 20 utilizes LEDs as a light source. The backlight module 20 comprises a carrying frame 21, a light source 22, an electrical connector 23, a carrier 24, a light guiding plate 25, and a driving board 26. The light source 22 has a plurality of LEDs 221 positioned on the carrier 24. The electrical connector 23, positioned on the carrier 24, comprises a plurality of input terminals connected to a voltage source and used to receive driving signals of the plurality of LEDs 221. The carrier 24 is positioned on the inner surface of the carrying frame 21, and one side of the carrier 24 contacts an inner surface 211 of the carrying frame 21. The light source 22 is positioned adjacent to one side 251 of the light guiding plate 25 so that the light can incident to the light guiding plate 25 from the light incident surface 251 beside the light guiding plate 25. As shown in FIG. 2, the driving board 26 is positioned adjacent to another side of the light guiding plate 25 and configured to output the driving signals of the plurality of LEDs 221.

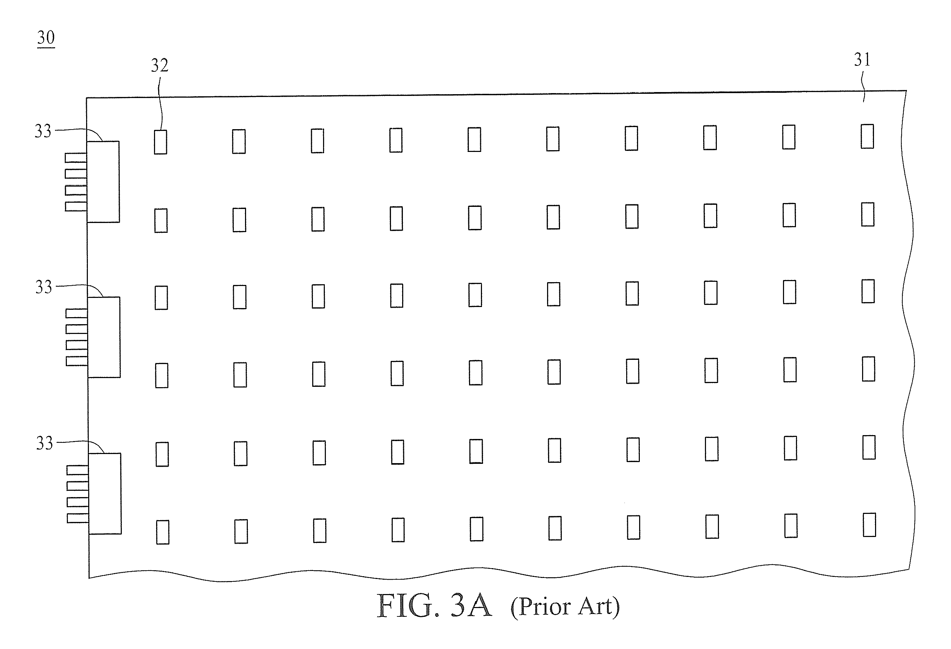

FIG. 3A shows a top view of a conventional light emitting device 30 of a direct backlight module, wherein the light emitting device 30 utilizes LEDs as a light source. The light emitting device 30 comprises a carrier 31, a plurality of LEDs 32, an electrical connector 33, and a driving board 34 (not shown). The plurality of LEDs 32 are positioned on a top surface of the carrier 31 and configured to diffuse the light via a diffuser plate above the carrier to provide a uniform surface light source for an LCD. A light reflective film is formed on the top surface of the carrier 31 to reflect the light emitted by the LEDs 32. The driving board 34 is positioned on the bottom surface of the carrier 31 and configured to output the driving signals of the LEDs 32.

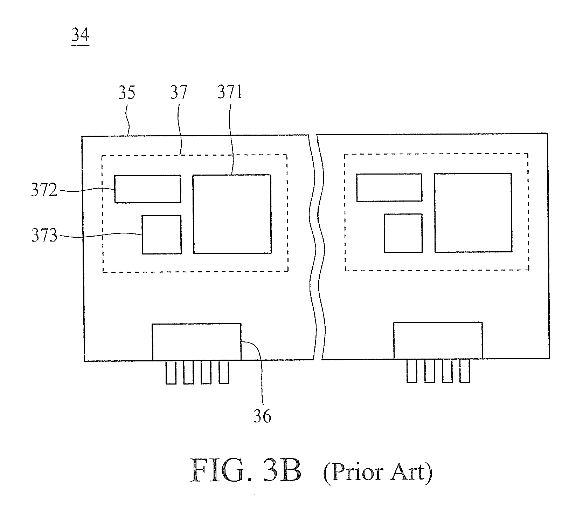

FIG. 3B shows a conventional driving board 34. The driving board 34 comprises a printed circuit board (PCB) 35, an electrical connector 36, and a driving unit 37. The driving unit 37 comprises a boost circuit 371, an LED driving circuit 372, and a passive component area 373. The boost circuit 371 is configured to adjust a supply voltage to a voltage required by the backlight module 30, and the LED driving circuit 372 is configured to generate the driving signals. The passive component area 373 is configured to position a plurality of passive components, such as resistors, capacitors, and diodes so as to set the control parameters of the LED driving circuit 372. The driving signals of the LEDs 32 are outputted to the electrical connector 33 on the top surface of the carrier 31 via the electrical connector 36 with connecting lines.

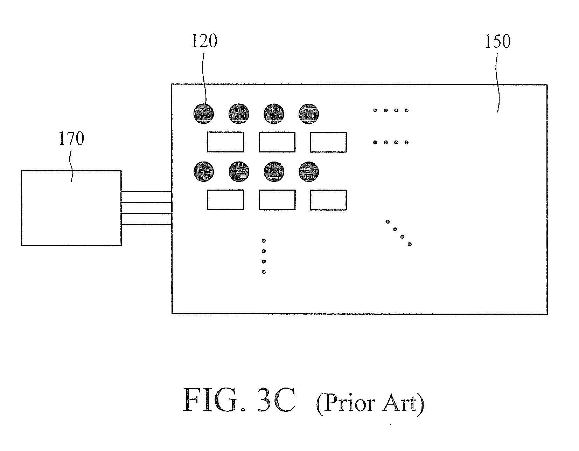

The light emitting device 30 in FIG. 3A and the backlight module 20 in FIG. 2 require a boost circuit to convert voltages. The boost circuit is implemented by an inductor, active devices, and a control circuit driving the active devices. Said components require space and thus need to be positioned on the extra driving boards 34 and 26. In addition, U.S. Patent Publication No. 20060092346 provides an LED backlight unit and a liquid crystal display device having the same. Referring to FIG. 3C, the LED backlight unit comprises a control unit PCB 170 and a light emitting unit PCB 150. A plurality of LEDs 120 and drive components are mounted together on the light emitting unit PCB 150, and PWM signals for controlling the LEDs 120 are outputted from the control unit PCB 170. The requirement of the driving boards 34, 26 and the control unit PCB 170 not only incurs additional material and assembling costs in production, but also demands consideration of the disposition of the wires when an operator connects carriers with driving boards or with the extra control unit PCB. Therefore, these conventional structures cannot meet the requirement of miniaturized structures of the market. On the basis of the above, there is a need for a direct backlight module and an edge-type backlight module and light-emitting device thereof for solving the problems mentioned above.

### SUMMARY OF THE INVENTION

An aspect of the present invention is to provide a light emitting device of a backlight module.

According to one embodiment of the present invention, the light emitting device of the backlight module comprises a carrier, an electrical contact, a light emitting diode (LED) driving circuit, and a plurality of LEDs. The carrier comprises a surface, and the electrical contact is electrically connected to a voltage source for providing a voltage potential substantially equal to that of the voltage source. The LED driving circuit comprises at least one driving component electrically connected to the electrical contact, and the plurality of LEDs electrically connected between the electrical contact and the LED driving circuit. The electrical contact, the LED driving circuit, and the plurality of LEDs are all positioned on the surface of the carrier.

Another aspect of the present invention is to provide a light emitting device of a backlight module comprising a plurality of light emitting strips.

According to one embodiment of the present invention, the light emitting strip comprises a carrier, an electrical contact, a light emitting diode (LED) driving circuit, and a plurality of LEDs. The carrier comprises a surface, and the electrical contact is electrically connected to a voltage source for providing a voltage potential substantially equal to that of the voltage source. The LED driving circuit comprises at least one driving component electrically connected to the electrical contact, and the plurality of LEDs electrically connected between the electrical contact and the LED driving circuit. The electrical contact, the LED driving circuit, and the plurality of LEDs are all positioned on the surface of the carrier.

Yet another aspect of the present invention is to provide a direct backlight module.

According to one embodiment of the present invention, the direct backlight module comprises a diffuser plate and a light emitting device positioned under the diffuser plate. The light emitting device comprises a carrier, an electrical contact, a light emitting diode (LED) driving circuit, and a plurality of LEDs. The carrier comprises a surface, and the electrical contact is electrically connected to a voltage source for providing a voltage potential substantially equal to that of the voltage source. The LED driving circuit comprises at least one driving component electrically connected to the electrical contact, and the plurality of LEDs electrically connected between the electrical contact and the LED driving circuit. The electrical contact, the LED driving circuit, and the plurality of LEDs are all positioned on the surface of the carrier.

Yet another aspect of the present invention is to provide a side-edge backlight module.

According to one embodiment of the present invention, the side-edge backlight module comprises a light guiding plate and a first light emitting device. The light guiding plate comprises a first side, a second side, a third side, and a fourth side, and the first light emitting device is positioned adjacent to the first side of the light guiding plate. The first light emitting device comprises a carrier, an electrical contact, a light emitting diode (LED) driving circuit, and a plurality of LEDs. The carrier comprises a surface, and the electrical contact is electrically connected to a voltage source for providing a voltage potential substantially equal to that of the voltage source. The LED driving circuit comprises at least one driving component electrically connected to the electrical contact, and the plurality of LEDs electrically connected between the electrical contact and the LED driving circuit. The electrical contact, the LED driving circuit, and the plurality of LEDs are all positioned on the surface of the carrier.

### BRIEF DESCRIPTION OF THE DRAWINGS

The invention will be described according to the appended drawings in which:
FIG. 1 shows a pictorial decomposition diagram of a conventional direct backlight module;
FIG. 2 shows a top view of a conventional side-edge backlight module;
FIG. 3A shows a top view of a conventional light emitting device of a direct backlight module;
FIG. 3B shows a conventional driving board;
FIG. 3C shows a conventional LED backlight unit;
FIG. 4 illustrates a light emitting device of a direct backlight module according to one embodiment of the present invention;
FIG. 5 illustrates a light emitting device of a direct backlight module according to another embodiment of the present invention;
FIG. 6 illustrates a light emitting device of a side-edge backlight module according to one embodiment of the present invention;
FIGS. 7A-7E illustrate a side-edge backlight module according to a variety of embodiments of the present invention;
FIG. 8 illustrates a circuit diagram of the light emitting devices according to one embodiment of the present invention; and
FIG. 9 illustrates a circuit diagram of the light emitting devices according to another embodiment of the present invention.

### DETAILED DESCRIPTION OF THE INVENTION

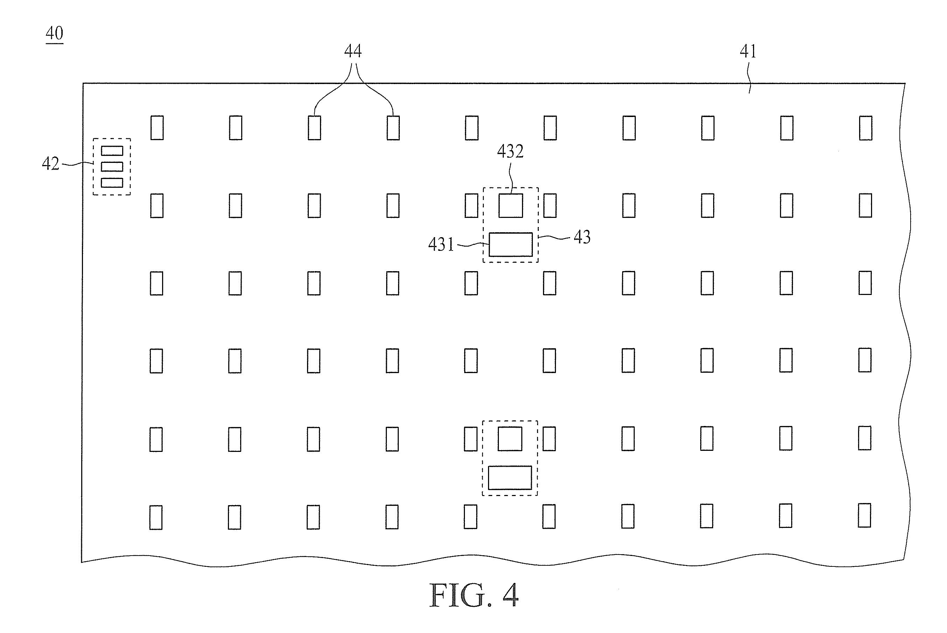

FIG. 4 illustrates a light emitting device 40 of a direct backlight module according to one embodiment of the present invention. The light emitting device 40 comprises a carrier 41, an electrical contact 42, an LED driving circuit 43, and a plurality of LEDs 44. A first surface of the carrier 41 is configured to carry the light emitting device 40. A diffuser plate is positioned above the first surface for providing a uniform surface light source to an LCD by diffusing the light of the light emitting device 40.

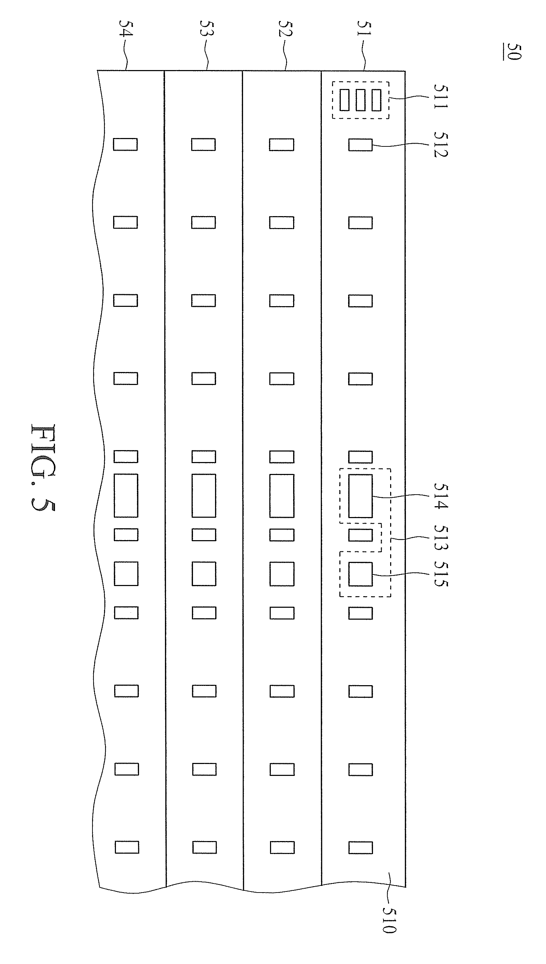

FIG. 5 illustrates a light emitting device 50 of a direct backlight module according to another embodiment of the present invention. The light emitting device 50 comprises a plurality of light emitting strips 51-54. Each of the light emitting strips 51-54 comprises a carrier 510, an LED driving circuit 513, and a plurality of LEDs 512. Referring to FIG. 5, the light emitting strip 51 further comprises an electrical contact 511 positioned on a first surface of the carrier 510 for providing a voltage source of the light emitting device 50. With the increasing size of the LCD, additional light emitting strips can be added as needed based on the size of the LCD.

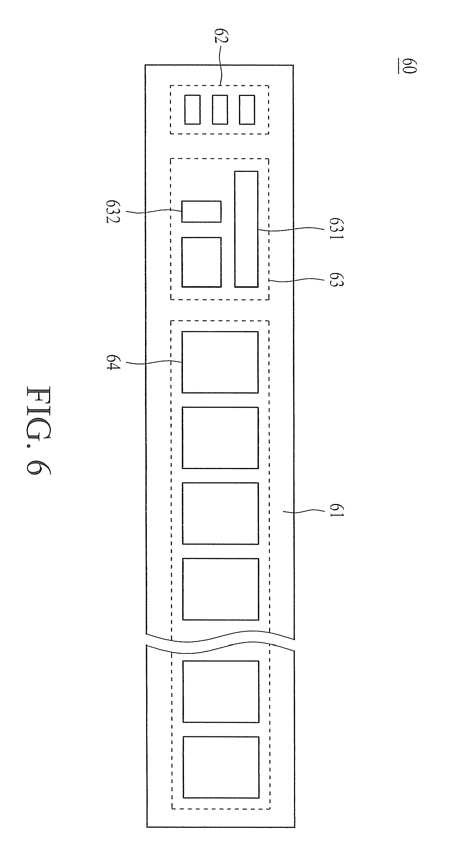

FIG. 6 illustrates a light emitting device 60 of a side-edge backlight module according to one embodiment of the present invention. The light emitting device 60 comprises a carrier 61, an electrical contact 62, an LED driving circuit 63, and a plurality of LEDs 64. The carrier comprises first and second surfaces, wherein the first surface is configured to carry the light emitting device 60 and the second surface, positioned opposite to the first surface, contacts a contact surface of a rear frame. Such contact can be implemented by cohering the second surface to the rear frame with a thermal interface material or other adhesive.

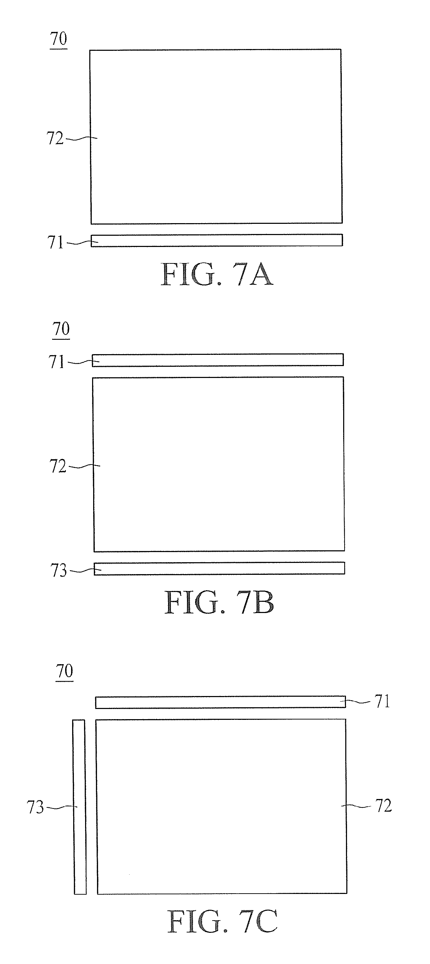

FIGS. 7A-7E illustrate a side-edge backlight module 70 according to a variety of embodiments of the present invention. The backlight module 70 comprises a light guiding plate 72 and a first light emitting device 71. The light guiding plate 72 has a first side, a second side, a third side, and a fourth side. As shown in FIG. 7A, the first light emitting device 71 is positioned adjacent to any side of the light guiding plate 72 and emits light to the light guiding plate 72, and thus the light guiding plate 72 provides a uniform and bright surface light to an LCD by emitting the light.

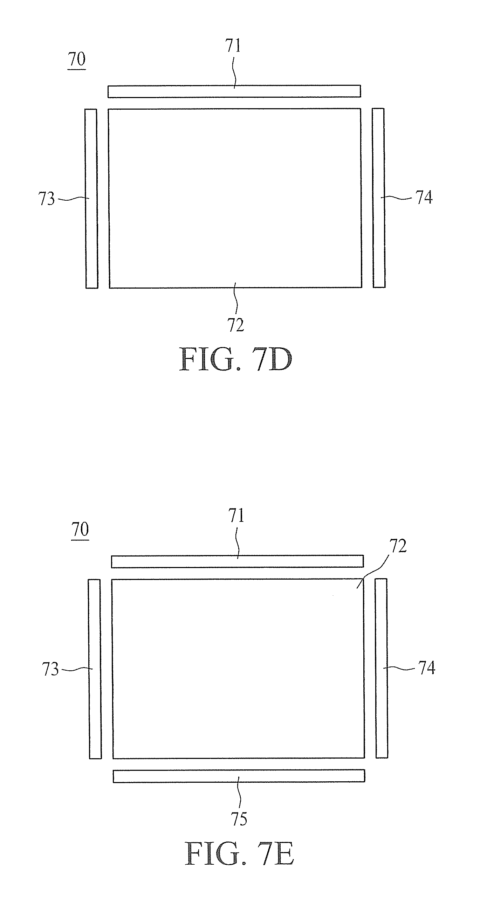

For LCDs of various size requirements, different sides of the light guiding plate 72 can be positioned by at least two light emitting devices based on the size of the LCD. According to one embodiment of the present invention, as shown in FIGS. 7B and 7C, the backlight module 70 comprises two sets of light emitting devices, wherein the first light emitting device 71 is positioned adjacent to the first side of the light guiding plate 72, and the second light emitting device 73 is positioned adjacent to the second side of the light guiding plate 72. The second side in this embodiment is parallel or perpendicular to the first side. According to another embodiment of the present invention, the backlight module 70 in FIG. 7D comprises three sets of light emitting devices, wherein the first, second, and third light emitting devices 71, 72, and 73 are positioned adjacent to the first, second, and third sides of the light guiding plate 72, respectively. The second side in this embodiment is parallel to the first side, and the third side is perpendicular to the first side. According to yet another embodiment of the present invention, the backlight module 70 in FIG. 7E comprises four sets of light emitting devices, wherein the first, second, third, and forth light emitting devices 71, 72, 73, and 74 are positioned adjacent to the four sides of the light guiding plate 72.

The carriers in FIGS. 4-6 can be a single layer or multi-layers of an elongated PCB, and a reflecting film disposed covering the carriers so as to enhance the emitting efficiency of the LEDs. The electrical contacts 42, 511, and 62 are configured to provide voltage sources of the light emitting devices, wherein each of the electrical contacts 42, 511, and 62 can be an electrical connector, a solder joint, or a pad. The LED driving circuits 43, 513, and 63 are electrically connected to the LEDs 44, 512, and 64 so as to transmit driving signals of the LEDs 44, 512, and 64. The LED driving circuits 43, 513, and 63 comprise driving components 431, 514, and 631 and passive components 432, 515, and 632, wherein the driving components 431, 514, and 631 can be either unpackaged dies or packaged chips, and the passive components 432, 515, and 632 can be a capacitor, a resistor, a diode, or combinations. In the embodiment, the unpackaged die is used to reduce the overall thickness and the occupied area of the light emitting device. In addition, the LED driving circuits 43, 513, and 63 further comprise an active component, such as a switching component implemented by a MOSFET or a diode. The passive components 432, 515, and 632 or the active components are electrically connected to the driving components 431, 514, and 631, and the LED driving circuits 43, 513, and 63 are positioned on the first surface of the carriers.

In one embodiment of the present invention, the LEDs 44, 512, and 64 can be dies emitting white light. In another embodiment of the present invention, the LEDs 44, 512, and 64 can be dies emitting red, green, blue, other color or combinations light. The LEDs 44, 512, and 64 are respectively positioned on the first surface of the carriers 41, 510, and 61, and the numbers and arrangement can be varied according to the requirement of the LCD. The term "positioned" as used above refers to a method in which the LEDs 44, 512, and 64 and the carriers 41, 510, and 61 are connected via surface mount, flip-chip, bump, or wire bonding. After the connecting process, an encapsulating material is applied to the LEDs 44, 512, and 64 and the driving components 431, 514, and 631, thereby protecting the components from pollution, humidity and other environmental impurities.

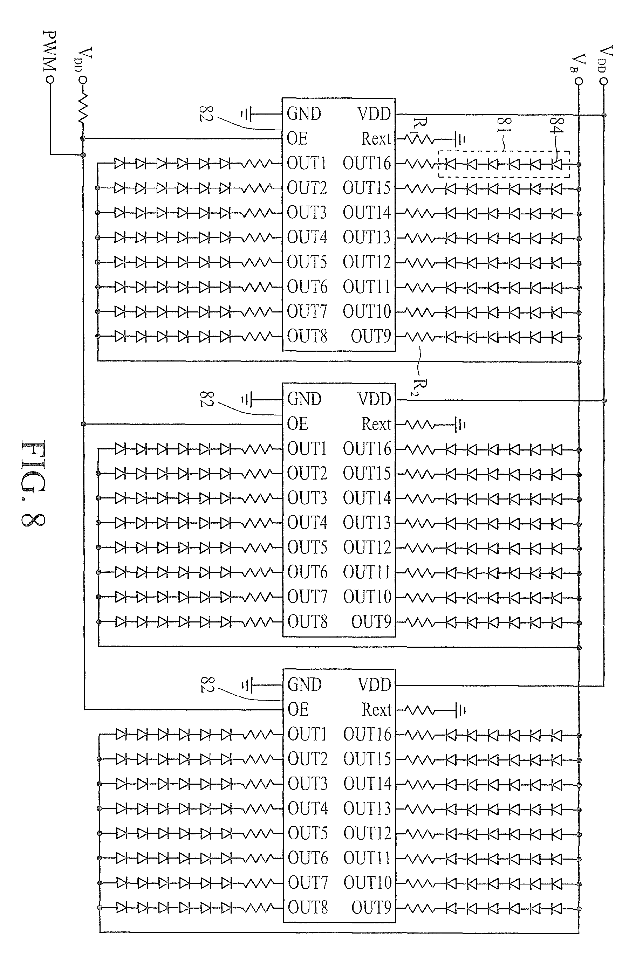

FIG. 8 illustrates a circuit diagram of the light emitting devices 40, 50, and 60 according to one embodiment of the present invention. Referring to FIG. 8, a light emitting row 81 is composed of a plurality of LEDs 84 connected in series, and the light source of the light emitting devices 40, 50, and 60 are composed of a plurality of light emitting rows 81 connected in parallel. In the embodiment, a first terminal of each light emitting row 81 is connected to a constant voltage V_{B}. The electrical contacts 42, 511, and 62 connected to a voltage source provide the constant voltage V_{B} via a filter circuit or a linear regulator, and the electrical contacts 42, 511, and 62 do not raise the voltage potential of the constant voltage V_{B} via an additional boost circuit. A second terminal of each light emitting row 81 is connected to an output terminal of a driving unit 82 via a resistor R₂, and the resistor R₂ is used to increase a voltage drop.

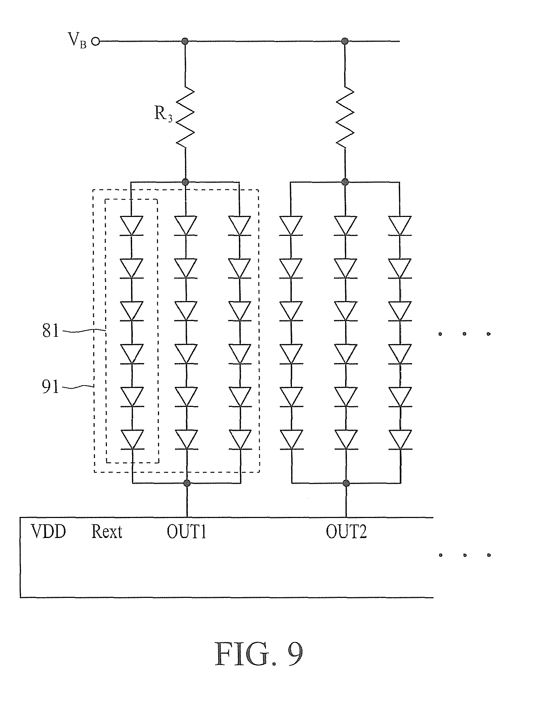

FIG. 9 illustrates a circuit diagram of the light emitting devices 40, 50, and 60 according to another embodiment of the present invention. Referring to FIG. 9, three sets of the light emitting row 81 are connected in parallel to form a light emitting unit. A first terminal is connected to the constant voltage V_{B} via a resistor R₃, and a second terminal is connected to the output terminal of the driving unit 82. Therefore, each output terminal of the driving unit 82 can control one set or a plurality of sets of the light emitting row 81.

Referring to FIG. 8, the driving unit 82 can be a sixteen-channel constant current driver for the LED lighting, and provides the PWM control effect by sinking constant current from LED clusters with a minimum pulse width. The driving unit 82 has a plurality of output terminals OUT1-OUT16, a voltage source terminal VDD, a ground terminal GND, a control terminal Rₑₓₜ, and an enable terminal OE. A voltage source V_{DD} and a ground potential provide voltage potential to the inner chip of the driving unit 82. The control terminal Rₑₓₜ is connected to a resistor R₁ for adjusting the current through the light emitting row 81 so as to control the brightness of the light emitting row 81. The enable terminal OE is connected to the voltage source terminal VDD so as to enable outputs of the output terminals OUT1-OUT16. Alternatively, the enable terminal OE is coupled to a PWM signal from a system control unit mounted onto the same board with the driving unit 82 so as to perform the PWM control function, i.e., function as a dimming control. The driving components 82 are positioned on the two sides of the first surface of the carrier or positioned uniformly or non-uniformly on the first surface of the carrier. The term "electrically connected" in the content refers to a method in which wires are connected in a layout via the lines of the first surface, the second surface, or a middle layer between the first and second layers.

In contrast with the prior art, the LED driving circuit and the LEDs are positioned close together on one surface of the carrier; therefore, the LED driving circuit can easily monitor the heat generated by the LEDs and the carrier, and if needed perform over-temperature protection to reduce risk of overheating damage. Also, as mentioned before, the present invention requires no additional boost circuit including a boost inductor, and thus can reduce the PCB area requirement, material cost, and assembly cost in production.

In summary, the present invention discloses in particular the following embodiments, which are claimed in the appended claims, but may also be claimed by means of separate independent claims and dependent claims as claimed in the following:

### Embodiment A:

A light emitting device of a backlight module, comprising: a carrier; an electrical contact electrically connected to a voltage source for providing a voltage potential substantially equal to that of the voltage source; a light emitting diode (LED) driving circuit comprising at least one driving component electrically connected to the electrical contact; and a plurality of LEDs electrically connected between the electrical contact and the LED driving circuit; wherein the electrical contact, the LED driving circuit, and the plurality of LEDs are all positioned on one surface of the carrier.

### Embodiment B:

A light emitting device of a backlight module comprising a plurality of light emitting strips, the light emitting strip comprising: a carrier; an electrical contact electrically connected to a voltage source for providing a voltage potential substantially equal to that of the voltage source; a light emitting diode (LED) driving circuit comprising at least one driving component electrically connected to the electrical contact; and a plurality of LEDs electrically connected between the electrical contact and the LED driving circuit; wherein the electrical contact, the LED driving circuit, and the plurality of LEDs are all positioned on one surface of the carrier.

### Embodiment C:

A direct backlight module, comprising: a diffuser plate; and a light emitting device positioned under the diffuser plate, wherein the light emitting device comprises: a carrier; an electrical contact electrically connected to a voltage source for providing a voltage potential substantially equal to that of the voltage source; a light emitting diode (LED) driving circuit comprising at least one driving component electrically connected to the electrical contact; and a plurality of LEDs electrically connected between the electrical contact and the LED driving circuit; wherein the electrical contact, the LED driving circuit, and the plurality of LEDs are all positioned on one surface of the carrier.

### Embodiment D:

A side-edge backlight module, comprising: a light guiding plate with a first side, a second side, a third side, and a fourth side; and a first light emitting device positioned adjacent to the first side of the light guiding plate, wherein the first light emitting device comprises: a carrier; an electrical contact electrically connected to a voltage source for providing a voltage potential substantially equal to that of the voltage source; a light emitting diode (LED) driving circuit comprising at least one driving component electrically connected to the electrical contact; and a plurality of LEDs electrically connected between the electrical contact and the LED driving circuit; wherein the electrical contact, the LED driving circuit, and the plurality of LEDs are all positioned on one surface of the carrier, and the LED driving circuit is configured to output PWM control signals for controlling the brightness of the plurality of LEDs.

The above-described embodiments of the present invention are intended to be illustrative only. Numerous alternative embodiments may be devised by those skilled in the art without departing from the scope of the following claims.

## Claims

1. A light emitting device of a backlight module, comprising:
a carrier (41; 51; 61);
an electrical contact (42; 511,62) electrically connected to a voltage source for providing a voltage potential substantially equal to that of the voltage source;
a light emitting diode (LED) driving circuit (43; 513; 63) comprising at least one driving component electrically connected to the electrical contact; and
a plurality of LEDs (44; 512; 64) electrically connected between the electrical contact and the LED driving circuit;
wherein the electrical contact, the LED driving circuit, and the plurality of LEDs are all positioned on one surface of the carrier.

2. The light emitting device of Claim 1, wherein the at least one driving component is either an unpackaged die or a packaged chip.

3. The light emitting device of Claim 1 or 2, wherein the LED driving circuit is configured to output PWM control signals for controlling the brightness of the plurality of LEDs.

4. The light emitting device of any of the preceding claims, wherein the LED driving circuit further comprises a passive component, and the passive component is a capacitor, a resistor, a diode, or the combinations thereof.

5. The light emitting device of any of the preceding claims, wherein the at least one driving component is positioned on two sides of the surface of the carrier, or positioned uniformly on the surface of the carrier.

6. The light emitting device of any of the preceding claims, wherein the plurality of LEDs are positioned in a line when the carrier is a strip, and the plurality of LEDs are positioned uniformly on the surface of the carrier if the carrier is a sheet.

7. The light emitting device of a backlight module according to any of the preceding claims, said light emitting device comprising a plurality of light emitting strips (51-54) each comprising:
a carrier, said LED driving circuit (513) and said plurality of LEDs (512).

8. A direct backlight module, comprising:
a diffuser plate; and
a light emitting device according to any of claims 1 to 7, said light emitting device being positioned under the diffuser plate.

9. A side-edge backlight module, comprising:
a light guiding plate with a first side, a second side, a third side, and a fourth side; and
a first light emitting device positioned adjacent to the first side of the light guiding plate, wherein
the first light emitting device is configured in accordance with any of claims 1 to 7 and
the LED driving circuit is configured to output PWM control signals for controlling the brightness of the plurality of LEDs.

10. The side-edge backlight module of Claim 9, further comprising a second light emitting device positioned adjacent to the second side of the light guiding plate, wherein the second side is parallel or perpendicular to the first side.

11. The side-edge backlight module of Claim 9 or 10. further comprising third and fourth light emitting devices positioned adjacent to the second and third sides of the light guiding plate, respectively, wherein the second side is parallel to the first side, and the third side is perpendicular to the first side.

12. The side-edge backlight module of any of claims 9 to 11, further comprising a fourth light emitting device positioned adjacent to the fourth side of the light guiding plate, wherein the fourth side is perpendicular to the first side.

13. The side-edge backlight module of any of claims 9 to 12, wherein the at least one driving component is positioned on the two sides of the surface of the carrier or positioned uniformly on the surface of the carrier.
